Europäisches Patentamt

European Patent Office

Office européen des brevets

(11) Veröffentlichungsnummer: **0 168 772**
A2

# (12) EUROPÄISCHE PATENTANMELDUNG

(21) Anmeldenummer: 85108612.4

(22) Anmeldetag: 10.07.85

(51) Int. Cl.⁴: **G 01 B 11/30**

(30) Priorität: 17.07.84 DE 3426332

(43) Veröffentlichungstag der Anmeldung: 22.01.86
Patentblatt 86/4

(84) Benannte Vertragsstaaten: AT BE CH DE FR GB IT LI LU NL SE

(71) Anmelder: **Erwin Sick GmbH Optik-Elektronik,
Sebastian-Kneipp-Strasse 1, D-7808 Waldkirch (DE)**

(72) Erfinder: **Weber, Klaus, Dr., Baumgartenstrasse 2,
D-7923 Königsbronn (DE)**

(74) Vertreter: **Dipl.-Phys.Dr. Manitz Dipl.-Ing., Dipl.-Wirtsch.
Finsterwald Dipl.-Chem.Dr. Heyn Dipl.-Phys. Rotermund
Morgan, B.Sc.(Phys), Robert-Koch-Strasse 1,
D-8000 München 22 (DE)**

(54) Optische Rauheitssonde mit Abtastung der Indikatrix.

(57) Eine optische Rauheitssonde zur Ermittlung der Rauheit einer Oberfläche erzeugt einen Lichtfleck auf der Oberfläche. Eine Lichtempfangsanordnung mit einer periodischen Lichtablenkvorrichtung (15; 15'; 15") lenkt das in unterschiedlichen Richtungen gestreute Licht auf einen einzigen Photoempfänger (12) und erfaßt so die Rückstreuindikatrix, die für die Rauheit der Oberfläche repräsentativ ist. Es kann zwischen zwei unterschiedlichen Meßarten gewählt werden, und zwar Abtasten der Rückstreukeule bei festem Einfallswinkel oder synchrone Veränderung von Einfalls- und Meßwinkel, um so den doppelten Streuwinkel zu erfassen.

0168772

Die Erfindung betrifft eine optische Rauheitssonde zur Ermittlung der Rauheit einer Oberfläche, bei der ein Lichtfleck auf der Oberfläche gebildet und durch eine photoelektronische Abtastvorrichtung die Rückstreu-Indikatrix abgetastet wird, um so eine für die Rauheit repräsentative Wertmenge zu erhalten.

Bei einer bekannten optischen Rauheitssonde wird auf der Oberfläche des hinsichtlich der Rauheit zu bestimmenden Gegenstandes mit senkrechtem Lichteinfall ein Lichtfleck erzeugt. Das rückgestreute Licht wird von einer Linse erfaßt und über einen Teilerspiegel auf eine lineare Photoempfängeranordnung gelenkt. Je nachdem, in welcher Weise das Licht an der Oberfläche gestreut wird, erhalten die Einzelphotoempfänger der linearen Photowandleranordnung unterschiedlich viel Licht. Durch eine angeschlossene Auswerteelektronik kann aus der Lichtverteilung auf die Rauhigkeit der Oberfläche geschlossen werden.

Nachteilig an der bekannten Rauheitssonde ist die Tatsache, daß viele Einzelphotoempfänger vorgesehen und deren Signale verarbeitet werden müssen. Hinzu kommt, daß bei Verwendung eines Objektivs mit Einstrahlung längs der Achse nur ein begrenzter Winkelbereich der Indikatrix erfaßt werden kann.

Das Ziel der vorliegenden Erfindung besteht nun darin, eine optische Rauheitssonde der eingangs genannten Gattung zu schaffen, bei der einerseits das rückgestreute Licht in einem großen Winkelbereich erfaßt wird, gleichwohl aber nur ein einziger Photoempfänger für dessen Empfang erforderlich ist.

Zur Lösung dieser Aufgabe sieht die Erfindung vor, daß eine
Lichtempfangsanordnung zeitlich nacheinander das in unterschiedlichen Richtungen gestreute Licht auf einen einzigen
Photowandler lenkt. Die Lichtempfangsanordnung enthält hierzu vorzugsweise eine periodische Lichtablenkvorrichtung wie
einen Schwingspiegel oder ein Spiegelrad, mittels dessen ein
bestimmter enger Winkelausschnitt aus dem rückgestreuten Lichtbündel zu einem an geeigneter Stelle angeordneten einzigen
Photoempfänger gelenkt wird. Auf diese Weise können von der
periodischen Lichtablenkvorrichtung nacheinander unterschiedliche enge Winkelbereiche des rückgestreuten Lichtes erfaßt
und auf den Photoempfänger gelenkt werden. In einer anschließenden elektronischen Auswerteschaltung, die gegebenenfalls mit Speichern ausgestattet ist, kann dann aus dem
unter den verschiedenen Winkeln empfangenen Licht die Rückstreuindikatrix gebildet und daraus auf die Rauhigkeit der
Oberfläche rückgeschlossen werden.

Eine erste vorteilhafte praktische Ausführungsform kennzeichnet sich dadurch, daß nahe der Oberfläche ein Objektiv angeordnet ist, welches entsprechend seiner Apertur das vom Lichtfleck rückgestreute Lichtbündel erfaßt und den Lichtfleck auf
eine periodische Lichtablenkvorrichtung abbildet, die das auftreffende Licht zu einem in einer Aperturebene angeordneten
Photoempfängerlenkt und so das in die unterschiedlichen Richtungen gestreute Licht nacheinander auf den Photoempfänger
gelangen läßt.

Hierbei kann das Sendelicht entweder über einen festen Spiegel
in den Strahlengang einspiegelbar sein, oder die Lichtquelle
ist neben dem Photoempfänger angeordnet, so daß Sende- und
Empfangsstrahl synchron abgelenkt werden. Auf diese Weise
wird bei einer Ablenkung um einen Winkel $\alpha$ gegen die optische
Achse der Streuwinkel $2\alpha$ vom Empfänger aufgenommen.

Eine weitere Ausführungsform ist so ausgebildet, daß sich über der Oberfläche ein vorzugsweise streifenförmiger sphärischer Hohlspiegel wölbt, dessen Mittelpunkt unmittelbar neben dem Lichtfleck liegt und daß eine periodische Lichtablenkvorrichtung das von unterschiedlichen aufeinanderfolgenden Stellen des Hohlspiegels in sich oder annähernd in sich zurückreflektierte Licht nacheinander zu einem Photoempfänger ablenkt.

Auch bei dieser Ausführungsform gibt es, wie bei der Ausführungsform mit Objektiv, zwei Meßarten.

Einmal kann das den Lichtfleck erzeugende Bündel über einen feststehenden Umlenkspiegel, also mit konstantem Einfallswinkel auf das Objekt gerichtet sein und nur das rückgestreute Licht wird vom Hohlspiegel auf der Lichtablenkvorrichtung konzentriert und so sequentiell nach Ausfallswinkeln auf den Empfänger gelenkt.

Zum anderen kann schon das den Lichtfleck erzeugende Bündel über die Lichtablenkvorrichtung und den Hohlspiegel auf das Objekt gespiegelt und das gestreut reflektierte Licht wiederum über den Hohlspiegel und die Lichtablenkvorrichtung auf den Empfänger gelenkt werden und auf diese Weise sowohl der Einfallswinkel als auch der Ausfallswinkel des gerade gemessenen Bündels synchron verändert werden. In diesem Falle wird also bei dem momentanen Einfallswinkel $\alpha$ die in den Streuwinkel $2\alpha$ fallende Intensität gemessen.

Der Übergang zwischen den beiden Meßarten kann bei geeignetem Aufbau des Strahleinganges dadurch erfolgen, daß der oben genannte Umlenkspiegel wegschaltbar vorgesehen wird.

Die Erfindung wird im folgenden beispielsweise anhand der Zeichnung beschrieben; in dieser zeigt:

Fig. 1    eine schematische Seitenansicht einer ersten Ausführungsform der erfindungsgemäßen Rauheitssonde,

Fig. 2    eine schematische Ansicht der Aperturebenen 14 bzw. 14' des Objektivs 11,

Fig. 3    eine Ansicht der Aperturebene 14' bei einer abgewandelten Ausführungsform,

Fig. 4    eine schematische Seitenansicht einer weiteren Ausführungsform einer erfindungsgemäßen Rauheitssonde,

Fig. 5    einen Schnitt nach Linie V-V in Fig. 4,

Fig. 6    eine schematische Ansicht einer weiteren Ausführungsform einer erfindungsgemäßen Rauheitssonde ähnlich der nach Fig. 4,

Fig. 7    einen Schnitt nach Linie VII-VII in Fig. 6, wobei die aus dem Laser 10, dem Dachkantprisma 9 und dem Photoempfänger 12 bestehende, auf einer geraden Linie liegende Anordnung zur besseren Veranschaulichung um die Achse 20 um 90$^\circ$ gekippt dargestellt ist, und

Fig. 8    eine schematische Ansicht analog den Fig. 5 und 7 einer Ausführungsform, mit der wahlweise die Funktion der Ausführungsform nach den Fig. 4,5 einerseits und Fig. 6,7 andererseits erzielt werden kann.

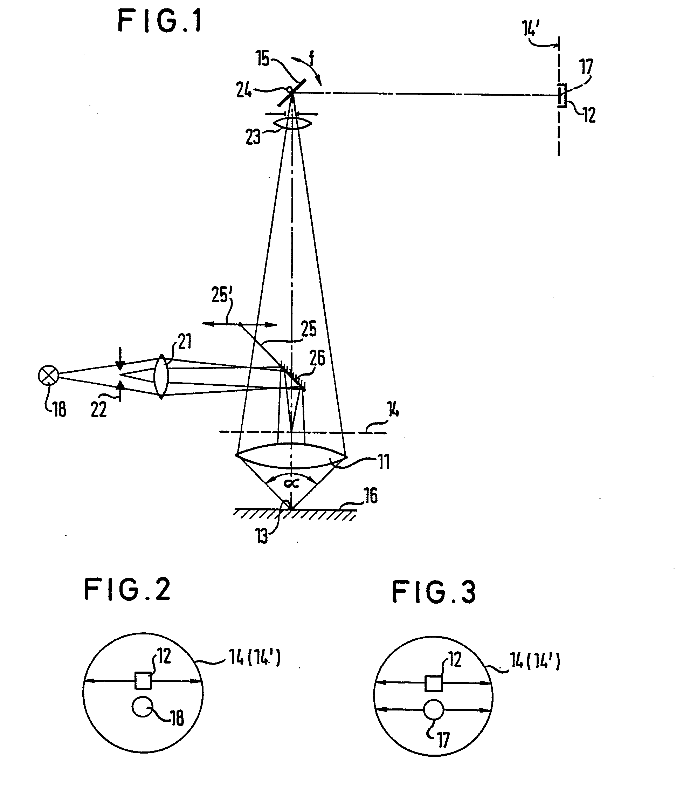

Nach Fig. 1 erzeugt eine Lichtquelle 18 über eine Blende 22 einen Kondensor 21, einen 90$^\circ$-Umlenkspiegel 26 und ein nahe der abzutastenden Oberfläche 16 angeordnetes Objektiv 11 auf einer lichtstreuenden Oberfläche 16 einen Lichtfleck 13. Das Objektiv 11 weist beispielsweise eine solche Öffnung auf, daß

es unter Winkeln von ± 45° von der Oberfläche 16 rückgestreutes Licht erfassen kann.

Das gleiche Objektiv 11 bildet den Lichtfleck 13 auf einem
Schwingspiegel 15 ab, der um eine senkrecht auf der Zeichnungsebene der Fig. 1 stehende Achse 24 im Sinne des Doppelpfeiles f
eine Schwingbewegung ausführen kann. Eine Feldlinse 23 bildet
die Aperturebene 14 in die Ebene 14' ab, in der ein Photoempfänger 12 angeordnet ist. Vom Schwingspiegel 15 gelangt
das Licht zu einem Photoempfänger 12, der in der Ebene 14'
angeordnet ist.

Nach Fig. 1 und 2 wird in der Aperturebene 14 die Indikatrix
des Oberflächenpunktes im Bereich des Lichtfleckes 13 im gesamten Aperturbereich von ±45° erfaßt. Die optische Anordnung
ist so, daß in den Aperturebenen 14,14' die Bilder der Lichtquelle 18 bzw. des Photoempfängers 12 in der aus Fig. 2 ersichtlichen Weise nebeneinanderliegen.

Bei einer Schwingbewegung des Schwingspiegels 15 wird aus dem
rückgestreuten Licht jeweils ein enger Winkelbereich herausgeschnitten und auf den Photoempfänger 12 gelenkt, was in
Fig. 2 durch den Doppelpfeil angedeutet ist. Zu einer bestimmten Zeit empfängt also der Photoempfänger 12 lediglich
Licht aus einem engen Rückstreu-Winkelbereich. Die Amplitude
des Schwingspiegels 15 ist so, daß nach einer Periode der gesamte Aperturbereich von ±45° gerade einmal überstrichen worden ist.

Erfindungsgemäß kann der an sich feststehende Umlenkspiegel
26 in Richtung des Pfeiles 25' aus der optischen Anordnung
herausgefahren und eine gemäß Fig. 3 neben dem Photoempfänger 12 angeordnete Lichtquelle 17 eingeschaltet werden. Diese beleuchtet die Oberfläche 16 über
den Schwingspiegel 15. In der Aperturebene 14 bewegen sich
nun die Bilder der Lichtquelle 17 und des Photoempfängers
12 synchron und das vom Objekt reflektierte Bild der Lichtquelle 17 gegenläufig. Ist das Empfängerbild in der Aperturebene 14 um einen Winkel $\alpha$ ausgeschwenkt, so liegt ihr vom
Objekt regulär reflektiertes Bild antisymmetrisch um $\alpha$ ausgeschwenkt in der Aperturebene 14, d.h., daß der Photoempfänger 12 die um den Winkel 2 $\alpha$ gestreute Strahlung mißt.

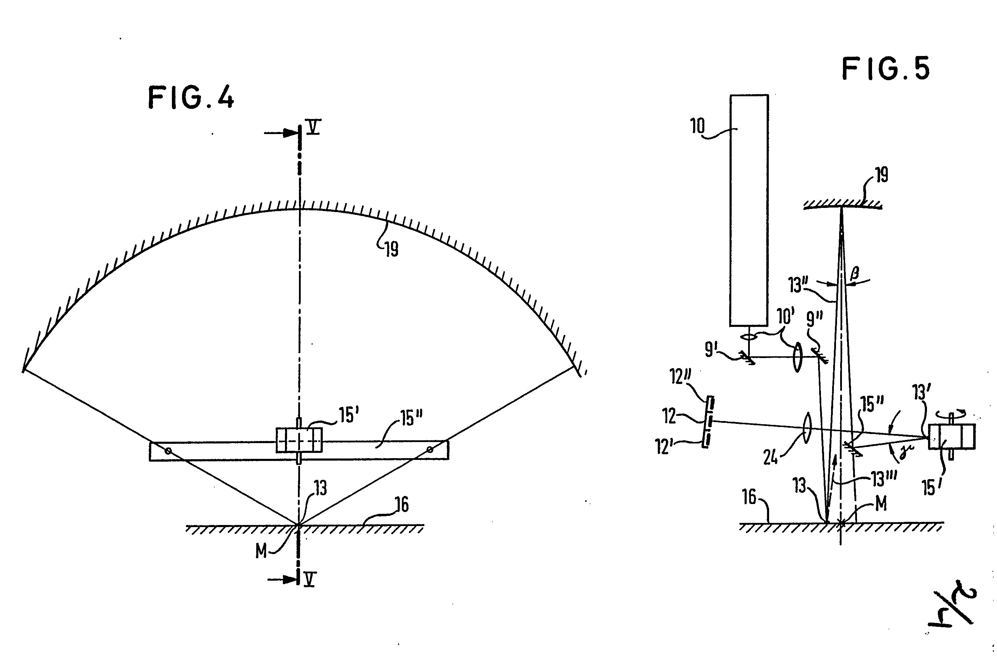

Bei der Ausführungsform nach den Fig. 4 und 5 wölbt sich ein
streifenförmiger sphärischer Hohlspiegel 19 über einer Oberfläche 16, deren Rauheit bestimmt werden soll. Der Mittelpunkt
M des Hohlspiegels 19 liegt auf der Oberfläche 16 in Richtung
senkrecht zu der den Hohlspiegel 19 enthaltenen Ebene (Fig.4)
unmittelbar neben dem Lichtfleck 13, der von einem neben dem
Hohlspiegel 19 angeordneten Laser 10 über Umlenkspiegel 9',9"
und eine Aufweitungsoptik 10' auf der Oberfläche 16 erzeugt
wird.

Das am Orte des Lichtflecks 13 vom Material 16 nach allen
Seiten gestreute Licht gelangt, wie in Fig. 5 beispielsweise
anhand eines Strahls 13" gezeigt ist, zum Hohlspiegel 19 und
wird von diesem unter einem kleinen Winkel ß zu einem streifenförmigen Umlenkspiegel 15" reflektiert, welcher sich nach
den Fig. 4 und 5 parallel zur Oberfläche 16 und zur Längsrichtung des Hohlspiegels 19 erstreckt und eine solche Länge
aufweist, daß er sämtliches vom Lichtfleck 13 zum Hohlspiegel 19 reflektierte Licht aufnehmen kann.

Das vom Umlenkspiegel 15" empfangene Licht wird im wesentlichen um 90° zur Oberfläche eines Spiegelrades 15' gelenkt,
wo von dem Streulicht ein Lichtfleck 13' erzeugt wird, der
sich am Ort des vom Hohlspiegel 19 entworfenen Bildes des
Lichtflecks 13 befindet. Die annähernd senkrecht stehende Drehachse des Spiegelrades 15' ist derart zur Vertikalen gekippt, daß das auftreffende Licht unter einem Winkel $\gamma$ am Umlenkspiegel 15" vorbei zu einem Photoempfänger 12 reflektiert wird. Durch die Linse (24) wird ein Bild des Lichtflecks 13 auf dem Photoempfänger 12 erzeugt. Beim Umlaufen des Spiegelrades 15' wird stets ein unter einem anderen Winkel innerhalb der Ebene der Fig. 4 vom Lichtfleck 13 gestreuter Lichtstrahl zum Photoempfänger 12 gelenkt, so daß durch das Drehen des Spiegelrades 15' nacheinander die gesamte Indikatrix des Materials am Orte des Lichtflecks 13 abgetastet wird. Eine an den Photoempfänger 12 angeschlossene Auswerteelektronik kann die empfangenen Lichtstreusignale in geeigneter Weise verarbeiten.

Zur Erweiterung der erhaltenen Lichtstreuinformation können unterhalb und oberhalb des Photoempfängers 12 weitere Photoempfänger 12' und 12" angeordnet sein, die es gestatten, auch das innerhalb der Ebene der Fig. 5 gestreute Licht zu empfangen. So kann beispielsweise der untere Photoempfänger 12' das gemäß der gestrichelten Linie 13"' innerhalb der Ebene der Fig. 5 gestreute Licht empfangen.

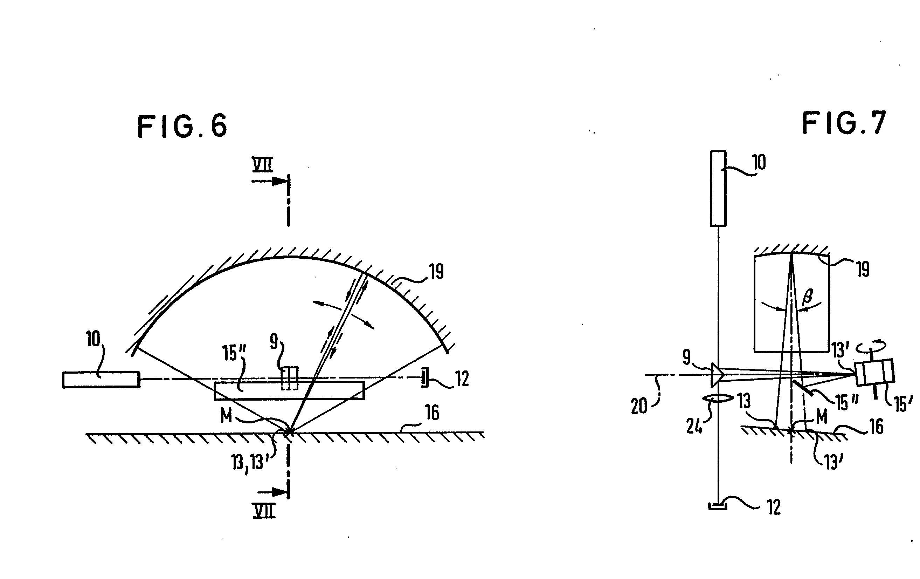

Während die Ausführungsform nach den Fig. 4 und 5 mit einem feststehenden Sendelichtbündel arbeitet, zeigen die Fig. 6 und 7 eine Ausführungsform, bei der auch das Sendelicht über das Spiegelrad 15" geleitet wird. Auch bei der Ausführungsform nach den Fig. 6 und 7 wölbt sich ein streifenförmiger Hohlspiegel 19 über der Oberfläche 16. Der Mittelpunkt M des Hohlspiegels 19 liegt auf der Oberfläche 16, deren Rauheit bestimmt werden soll, in Richtung senkrecht zu der den Hohlspiegel 19 enthaltenden Ebene (Fig.6) unmittelbar neben dem Lichtfleck 13, der von einem zwischen dem Hohlspiegel 19 und der Oberfläche 16 gemäß Fig. 6 und 7 angeordneten Laser 10 erzeugt wird. Das Licht des Lasers 10 wird zu diesem Zweck horizontal auf ein Dachkantprisma 9 geworfen, welches den Lichtstrahl um 90$^\circ$ zu einem auf der entgegengesetzten Seite des Hohlspiegels 19 angeordneten Spiegelrad 15' lenkt, dessen Lichtauftrefffläche 13' über den Umlenkspiegelstreifen 15" zum Bild
des Lichtflecks im Objekt 13' und über den Hohlspiegel
19 zum Lichtfleck selbst (13) konjugiert ist.

Da der so erzeugte Lichtfleck 13 unmittelbar neben dem
Krümmungsmittelpunkt M des sphärischen Hohlspiegels 19
liegt, wird das vom Objekt 16 zurückgestreute Licht in
einem sehr großen Winkelbereich praktisch ohne Aberrationen in den Bildpunkt 13' in der Objektebene und damit über den Umlenkspiegel 15" in den dazu konjugierten
Fleck 13' auf dem Spiegelrad abgebildet. Der Winkelbereich, der vom Hohlspiegel im Ausführungsbeispiel erfaßt wird, ist $\pm$ 60$^{\text{o}}$, die Apertur also 0,87.

Das gestreute Licht wird nun jeweils immer an der Winkelposition, wo sich gerade der Einfallslichtstrahl befindet,
vom Spiegelrad 15' erfaßt und über die andere Hälfte des
Dachkantprismas 9 auf den Photoempfänger 12 gelenkt. Auf
diese Weise kann das vom Lichtfleck 13 rückgestreute Licht
über einen sehr großen Winkelbereich von vorliegend 120$^{\text{o}}$
gegen den Ausfallswinkel bei regulärer Reflexion erfaßt
und in einer nicht dargestellten Auswerteelektronik, die
an den Photoempfänger 12 angeschlossen ist, verarbeitet
werden.

Da bei rauhen Oberflächen die Rückstreukurven sehr
flach sind, eignet sich die voranstehend beschriebene
Ausführungsform besonders für die Rauhigkeitsmessung
bei sehr rauhen Oberflächen.

Der Erfindungsgedanke der vorliegenden Ausführungsform besteht
im wesentlichen darin, daß der sphärische Spiegel mit annähernd
durch seinen Krümmungsmittelpunkt laufenden Beleuchtungs- und
Meßbündeln beaufschlagt wird. Obwohl auch mit einem Teilerspiegel gearbeitet werden kann, wird vorwiegend ein Autokollimationsstrahlengang zwischen Sender und Empfänger dadurch verwirklicht,
daß über das Ablenk-Dachkantprisma 9 Sender und Empfänger unter
einem kleinen Winkel zueinander angeordnet sind, und zwar in
Richtung der Abtastwinkelbewegung.

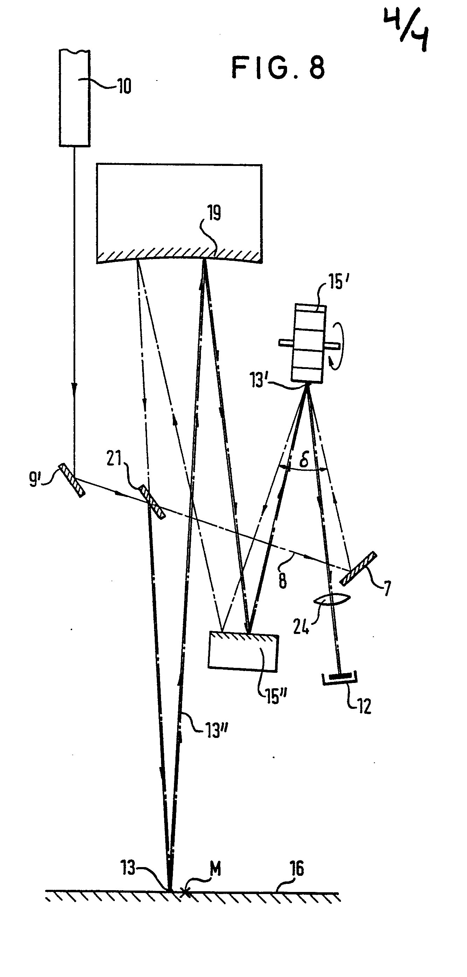

Bei der Ausführungsform nach Fig.8 entwirft ein Laser 10 über zwei
annähernd parallele Umlenkspiegel 9', 21 wieder den Lichtfleck 13 auf
der Oberfläche 16 des bezüglich seiner Rauheit zu untersuchenden
Materials. Die unter dem Reflexionswinkel gestreuten Lichtstrahlen
13" werden ähnlich wie bei dem Ausführungsbeispiel nach Fig.4,5 über
den Hohlspiegel 19, dessen Mittelpunkt M ähnlich wie bei der Ausführungsform nach Fig. 5 angeordnet ist, und einen senkrecht zur Zeichnungsebene der Fig. 8 verlaufenden Umlenkplanspiegel 15" auf die
Lichtauftrefffläche 13' eines Spiegelrades 15 gelenkt. Die Lichtauftrefffläche 13' befindet sich wieder optisch im Abstand gleich
der Länge des Radius von dem Hohlspiegel 19. Das vom Spiegelrad 15
reflektierte Licht trifft über die Linse 24 auf den Photoempfänger 12. Die
Wirkungsweise ist analog der Ausführungsform nach den Fig. 4 und 5.

Erfindungsgemäß kann jedoch der Umlenkspiegel 21 mechanisch aus
dem Strahlengang herausgeschoben oder -geschwenkt werden, worauf
das Sendelichtbündel 8 über einen Umlenkplanspiegel 7 auf das Spiegelrad 15 gelangt und unter einem Winkel $\delta$ zu dem streifenförmigen Umlenkspiegel 15" reflektiert wird, von wo es über den Hohlspiegel 19 zur Oberfläche der Bahn 16 gelangt und dort den Lichtfleck 13 erzeugt. Nunmehr ist das den Lichtfleck 13 erzeugende
Sendelichtbündel jedoch nicht mehr wie bei eingefahrenem Umlenkspiegel 21 feststehend, sondern es wird entsprechend der Drehung
des Spiegelrades 15' aus ständig anderen Richtungen auf die Oberfläche der Bahn 16, jedoch stets an die gleiche Stelle neben dem
Mittelpunkt M fallen.

0168772

Der Empfang des gestreuten Lichtes 13" erfolgt in der gleichen
Weise wie bei in den Strahlengang eingefahrenem Umlenkspiegel 21.
Der streifenförmige Umlenkspiegel 15" und der Hohlspiegel 19 werden also in diesem Fall genau wie die gleich numerierten Elemente
des Ausführungsbeispiels nach den Fig. 6 und 7 doppelt ausgenutzt.

0168772

Patentansprüche

1. Optische Rauheitssonde zur Ermittlung der Rauheit einer Oberfläche, bei der ein Lichtfleck auf der Oberfläche gebildet
und das rückgestreute Licht durch eine photoelektronische
Abtastvorrichtung erfaßt wird, welche eine für die Rauheit
der Oberfläche repräsentative Wertemenge bildet, dadurch
g e k e n n z e i c h n e t, daß eine Lichtempfangsanordnung
zeitlich nacheinander das in unterschiedlichen Richtungen gestreute Licht auf einen einzigen Photowandler lenkt.

2. Rauheitssonde nach Anspruch 1, dadurch g e k e n n -
z e i c h n e t , daß nahe der Oberfläche (16) ein Objektiv (11) angeordnet ist, welches entsprechend seiner
Apertur das vom Lichtfleck (13) rückgestreute Lichtbündel erfaßt und den Lichtfleck (13) auf eine periodische
Lichtablenkvorrichtung (15) abbildet, die das auftreffende Licht zu einem in einer Aperturebene (14') angeordneten Photoempfänger (12) lenkt und so das in die unterschiedlichen Richtungen gestreute Licht nacheinander
auf den Photoempfänger (12) gelangen läßt.

3. Rauheitssonde nach Anspruch 2, dadurch g e k e n n -
z e i c h n e t , daß das Sendelicht über einen Spiegel
(26) wahlweise in der Achse oder am Aperturrand in den
Strahlengang einspiegelbar ist.

4. Rauheitssonde nach Anspruch 1 oder 2, dadurch g e k e n n -
z e i c h n e t , daß das Sende-Lichtbündel über die gleiche
periodische Lichtablenkvorrichtung geführt wird wie das rückgestreute Empfängerlichtbündel.

5. Rauheitssonde nach Anspruch 4, dadurch g e k e n n -
z e i c h n e t , daß die Lichtquelle (17) neben dem
Photoempfänger (12) in einer Pupillenebene (14') angeordnet ist.

6. Rauheitssonde nach Anspruch 1, dadurch g e k e n n -
z e i c h n e t , daß über der Oberfläche ein vorzugsweise streifenförmiger sphärischer Hohlspiegel (19) so
angebracht ist, daß der von einem Laser (10) erzeugte
Lichtfleck (13) vorzugsweise in Richtung senkrecht zu der
durch den Hohlspiegel definierten Ebene unmittelbar neben
seinem Krümmungsmittelpunkt (M) liegt, so daß das gestreut
reflektierte Licht über diesen Hohlspiegel und einen planen
Umlenkspiegel (15") auf eine am Ort des Bildes des Lichtflecks angeordnete periodische Lichtablenkvorrichtung (15')
gelenkt und von dieser für die verschiedenen Streuwinkel
zeitlich nacheinander auf einen Photoempfänger (12) weitergeleitet wird.

7. Rauheitssonde nach Anspruch 1, dadurch g e k e n n - z e i c h n e t , daß sich über der Oberfläche (16) ein vorzugsweise streifenförmiger sphärischer Hohlspiegel (19) wölbt, dessen Mittelpunkt dicht neben dem Lichtfleck (13) liegt, daß das Bild (13') des Lichtfleckes über Umlenkspiegel (15") auf eine Lichtablenkvorrichtung (15') gespiegelt wird und daß diese Lichtablenkvorrichtung (15') sowohl den Einfallswinkel des den Lichtfleck erzeugenden Bündels als auch den Meßwinkel für das rückgestreute Licht synchron periodisch verändert, so daß das in Einfallsrichtung zurückgestreute Licht auf den Photoempfänger (12) geleitet wird.

8. Rauheitssonde nach Anspruch 6 und 7, dadurch g e k e n n - z e i c h n e t , daß die Anordnung nach Anspruch 6 mit feststehendem Einfallsstrahl und Abtastung des Streuwinkels und die Anordnung nach Anspruch 7 mit synchroner Variation von Einfalls- und Streuwinkel durch Umschalten eines Planspiegelelements (21) wechselweise realisierbar ist.

9. Rauheitssonde nach einem der Ansprüche 6 bis 8, dadurch g e k e n n z e i c h n e t , daß nahe der Oberfläche (16) ein parallel zum Hohlspiegel (19) verlaufender streifenförmiger Umlenkplanspiegel (15") von solcher Länge angeordnet ist, daß er das gesamte vom Hohlspiegel (19) reflektierte Licht empfängt und das auftreffende Licht zu einem optisch ebenfalls im Mittelpunkt des Hohlspiegels (19) angeordneten Spiegelrad (15') lenkt, welches gegebenenfalls den Sendelichtstrahl über den Umlenkplanspiegel (15") und den Hohlspiegel (19) zur Oberfläche (16) und das praktisch in sich zurückgestreute Licht zu dem Photoempfänger (12) leitet.

FIG.1

FIG.2

FIG.3

# FIG.4

# FIG.5

FIG.6

FIG.7

FIG. 8